# EUROPEAN PATENT SPECIFICATION

(11) **EP 3 628 919 B1**
(45) Date of publication and mention of the grant of the patent: **22.02.2023**
(21) Application number: 18382691.6
(22) Date of filing: 27.09.2018
(51) Int. Cl.: F21V 8/00, G02F 1/01, G02F 1/315, G09F 9/30

(54) **DEVICE AND METHOD FOR DISPLAYING OPTICAL INFORMATION**
VORRICHTUNG UND VERFAHREN ZUR ANZEIGE VON OPTISCHEN INFORMATIONEN
DISPOSITIF ET PROCÉDÉ D'AFFICHAGE D'INFORMATIONS OPTIQUES

(43) Date of publication of application: 01.04.2020
(73) Proprietor: BSH Hausgeräte GmbH, 81739 München (DE)
(72) Inventor: Alaman Aguilar, Jorge, 50012 Zaragoza (ES); Schlaß, Alexander, 14624 Dallgow-Döberitz (DE); Schmidt, Sebastian, 10715 Berlin (DE); Schulz, Julia, 16321 Bernau (DE)

(56) References cited:
- EP-A1- 3 038 077
- CN-A- 106 405 915
- US-A- 5 732 177
- US-A1- 2014 132 883
- US-B1- 6 210 012

## Description

The present invention relates to a device for displaying optical information to a user. The present invention further relates to a home appliance comprising such a device. The present invention furthermore relates to a method for manufacturing a device for displaying optical information to a user.

In order to display optical information to a user, particularly in displays of home appliances, usually LED lamps or other conventional illumination technologies are used. These technologies are limited though by their need for physical space for light sources and related electronic elements, especially when lighting effects such as diffusion or dimming, or several illuminated elements are used. These conventional technologies also have high power consumption and often do not show a high temperature or humidity resistance. EP3038077A discloses an electronic appliance, such as a dishwasher, including a display device, the display device comprising a substrate, a light guiding layer, two light sources, a light barrier in between the light sources and a control circuit to control the light sources.

US5732177 A discloses a light routing structure to be used for a display, the light routing structure comprising a substrate, a waveguide, phosphor filled pixel elements, a TIR switch in between the pixel elements and a controller to control the switch.

The present invention therefore deals with the problem of specifying an improved or at least alternative embodiment of a device for displaying optical information which is distinguished in particular by a compact design, and thus by a low requirement for installation space, and also by a simple manufacturing process and a low requirement for necessary components, such as electronic elements and light sources, and thus by low production costs. The present invention further deals with the problem of specifying a method for manufacturing such a device for displaying optical information.

This problem is solved by the subject matter of the independent patent claims. Preferred embodiments are the subject matter of the dependent patent claims.

Accordingly, the basic idea of the invention is to display optical information by radiating luminescent elements arranged on a radiation guide with only a few radiation sources or even just one single radiation source. In the course of this, radiation from the radiation sources is guided inside the radiation guide, while the reflectance of a barrier element arranged on the radiation guide between at least two luminescent elements is influenceable from the exterior.

The device for displaying optical information to a user comprises a substrate and a radiation guide provided on top of the substrate for guiding a source radiation. The device further comprises at least two luminescent elements, wherein the at least two luminescent elements emit visible light when radiated via the source radiation. Furthermore, the device comprises at least one barrier element arranged in between the at least two luminescent elements, wherein the at least one barrier element is configured such that its reflectance with respect to the source radiation is influenceable from the exterior.

The device further comprises an excitation source connected with the at least one barrier element for influencing the reflectance of the at least one barrier element. In this way, the reflectance of the at least one barrier element can be increased or decreased as desired and the information displayed by the device of the present invention conveniently adjusted. Additionally, the excitation source can be arranged far away from the radiation guide unlike local electronics, in order to avoid potential high temperatures and, alternatively or additionally, high humidity in the vicinity of the radiation guide. Furthermore, by using a single excitation source, no further electronic components are necessary regardless of the number of barrier elements the device comprises.

In a preferred embodiment, the radiation guide is shaped linearly along a longitudinal direction L the at least two luminescent elements and the at least one barrier element are arranged along the longitudinal direction L adjacent to the radiation guide. Via such geometry, a particularly compact design and low requirement for installation space can be achieved.

The device further comprises a first radiation source and a second radiation source, particularly LEDs, wherein the first radiation source and the second radiation source emit the source radiation during operation of the device. Such a configuration allows displaying information on two sides of the at least two luminescent elements. Additionally, no further radiation sources are required independent of the number of luminescent elements.

The wavelength of the source radiation which the first radiation source emits and the wavelength of the radiation which the second radiation source emits are different from each other, such that the at least two luminescent elements emit visible light of a different color when radiated via the first radiation source than when radiated via the second radiation source. Thereby information can be displayed in at least two colors.

In an advantageous embodiment, the first radiation source and, additionally or alternatively, the second radiation source are arranged in the extensions of the radiation guide along the longitudinal direction. Via such geometry, an even more compact design and low requirement for installation space can be achieved. Additionally, the source radiation can easily enter the radiation guide from its longitudinal ends. Furthermore, the radiation sources can be arranged far away from the radiation guide, in order to avoid potential high temperatures and, alternatively or additionally, high humidity in the vicinity of the radiation guide.

Preferably, the substrate is partially radio-opaque, such that the at least two luminescent elements are only observable by a user when radiated via the source radiation. In this way, a user will perceive a homogenous appearance of the device while the at least two luminescent elements are not radiated, and only observe more information when a luminescent element is radiated.

Preferably, the excitation source is configured such that it influences the reflectance of the at least one barrier element electrically and/or thermically. This allows for simple control of the at least one barrier element and thus of the displayed information. If the excitation source influences the reflectance thermically, this can also lead to a reduction of condensation in the vicinity of the radiation guide.

In a further advantageous embodiment, the device further comprises a cladding coating provided between the substrate and the radiation guide. In this way, the reflectance at the surface between the substrate with the cladding coating and the radiation guide is more homogenous and predictable, while fixing the radiation guide to the substrate can also be achieved more easily.

The invention relates to a home appliance, such a dishwashers, washing machines, dryers, wash-dryers, ovens, cooktops, refrigerators, coffee machines,... . The home appliance further comprises an electronic control unit for controlling an excitation source and a first and the second radiation source. Furthermore the home appliance comprises a display for displaying information regarding the home appliance operation, wherein the display comprises a device presented above. The previously explained advantages of the device therefore also transfer to the home appliance.

Preferred examples of the invention are illustrated in the drawings and will be explained in more detail in the following description.

In the drawings, in each case schematically:
Fig. 1 shows an example of a first for displaying optical information 1 to a user, not being part of the invention, in an assembled state in a profile view,
Fig. 2 shows an example of a second device for displaying optical information 1 to a user in an assembled state in a profile view.

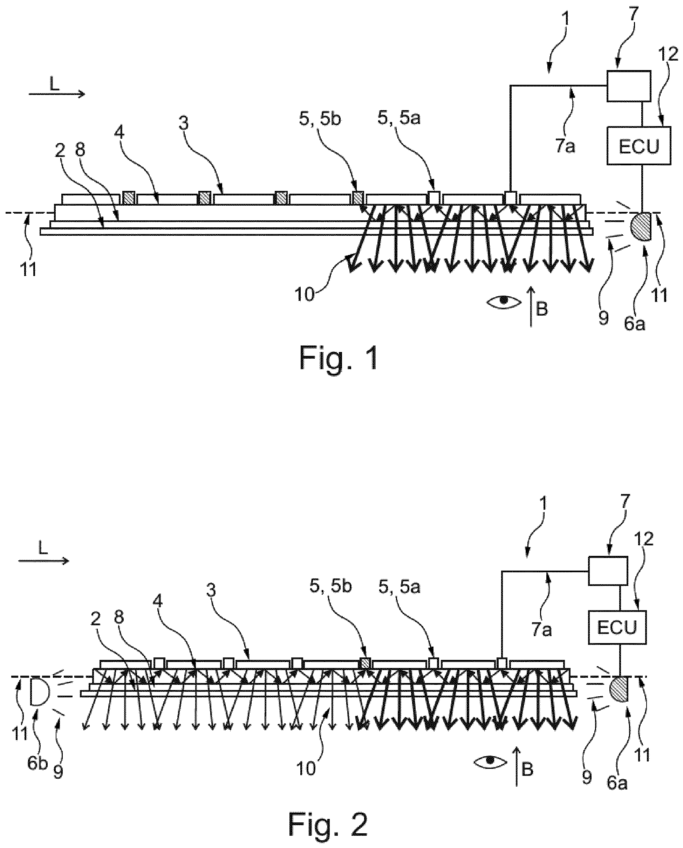

According to figures 1 and 2, the device 1 comprises a substrate 2. A radiation guide 4 is arranged on top of the substrate 2 for guiding a source radiation 9 to luminescent elements 3. The luminescent elements 3 are arranged on top of the radiation guide 4. The luminescent elements emit visible light 10 when radiated via a source radiation 9. The luminescent elements 3 are spaced apart from each other. Barrier elements 5 are arranged in between the luminescent elements 3, wherein each barrier element 5 is configured such that its reflectance with respect to the source radiation 9 is influenceable from the exterior. The barrier elements 5 and the luminescent elements 3 are arranged alternatingly along a longitudinal direction L adjacent to the radiation guide 4. The radiation guide 4 is shaped linearly along the longitudinal direction L, and the substrate 2 is shaped linearly along the longitudinal direction L.

The device 1 further comprises an excitation source 7 connected with the barrier elements 5 via the excitation connectors 7a for influencing the reflectance of the barrier elements 5. The excitation source 7 is configured such that it influences the reflectance of the barrier elements 5 electrically and, alternatively or additionally, thermically. Depending on the reflectance of a barrier element 5, the barrier elements 5 can act as reflecting barrier elements 5a or non-reflecting barrier elements 5b. Accordingly, some of the source radiation 9 guided by the radiation guide 4 can be reflected off a barrier element 5 acting as a reflecting barrier element 5a, and be further guided to the next luminescent element 3, where some of the reflected radiation is absorbed by that next luminescent element 3. Thereafter the source radiation 9 can be guided to a next barrier element 5a, where it can again be reflected and continue to repeat the previous process. Alternatively or additionally, some of the source radiation 9 guided by the radiation guide 4 can also be not reflected of a barrier element 5 acting as a non-reflecting barrier element 5b, and instead be absorbed by the non-reflecting 5b barrier element or transmitted through it. In this case the source radiation 9 is not guided further by the radiation guide 4 and is not absorbed by following luminescent elements 3.

As shown in figure 1, the device 1 comprises a radiation source 6a, particularly a LED, wherein the radiation source 6a emits the source radiation 9 during operation of the device 1. The radiation source 6a is preferably arranged in the extensions 11 of the radiation guide 4 along the longitudinal direction L.

As shown in figure 2, the device 1 comprises a first radiation source 6a and a second radiation source 6b, particularly LEDs, wherein the first radiation source 6a and the second radiation source 6b emit the source radiation 9 during operation of the device 1. A first wavelength of the source radiation 9 emitted by the first radiation source 6a and a second wavelength of the source radiation 9 emitted by the second radiation source 6b are different from each other. Thus, the luminescent elements 3 emit a different visible color when radiated via the first radiation source 6a than when radiated via the second radiation source 6b. The first radiation source 6a and the second radiation source 6b are preferably arranged in the extensions 11 of the radiation guide 4 along the longitudinal direction L. Particularly, the first and the second radiation source 6b can be arranged on opposite sides of the radiation guide 4. In this way, source radiation 9 emitted from the first radiation source 6a and source radiation 9 emitted from the second radiation source 6b can travel through the radiation guide 4 in opposite directions and each of the luminescent elements 3 can be radiated by the first radiation source 6a alone, or by the second radiation source 6b alone, or by both of the radiation sources 6a, 6b simultaneously.

According to the first and second devices discussed above, the substrate 2 is partially radio-opaque such that the luminescent elements 3 are only observable by a user when radiated by the source radiation 9, and hence emit visible light 10. The user is considered to be looking from a side of the substrate 2 opposite to the side the luminescent elements 3 are arranged on.

The device 1 can further comprise a cladding coating 8 between the substrate 2 and the radiation guide 4. In case there is no cladding coating 8 on the substrate 2 the refractive indices of the radiation guide 4 and the substrate 2 are such that the source radiation 9 inside the radiation guide 4 is reflected at the contact surface between the radiation guide 4 and the substrate 2. In case there is a cladding coating 8 on the substrate 2, the refractive indices of the radiation guide 4 and the cladding coating 8 are such that the source radiation 9 inside the radiation guide 4 is reflected at the contact surface between radiation guide 4 and the cladding coating 8.

In figures 1 and 2 not shown is a home appliance, particularly a dishwasher, comprising an electronic control unit 12 for controlling the excitation source 7 and a first and the second radiation source 6a, 6b. The home appliance further comprises a display for displaying information regarding the home appliance operation to a user, wherein the display comprises a device 1.

According to the first example of device 1, not being part of the invention, the further an operating cycle of the home appliance has progressed, the more or the fewer luminescent elements 3 can be radiated and therefore emit visible light 10 and be observable by a user.

According to the invention, and according to the second example of device 1, the further an operating cycle of the home appliance has progressed, the more or the fewer luminescent elements 3 are radiated by the first radiation source 6a and therefore emit visible light 10 of a first color and be observable by a user, while the remaining luminescent elements 3 are radiated by the second radiation source 6b and therefore emit visible light 10 of a second color different to the first and be observable by a user.

The cladding coating 8 provided between the substrate 2 and the radiation guide 4 can be manufactured by depositing a material on the substrate 2 via an ink jet. The radiation guide 4 in turn can be manufactured by depositing a material on the substrate 2 or on the cladding coating 8 respectively, if a cladding coating 8 is provided, via an inkjet. The luminescent elements 3 and the barrier elements 5 can also be manufactured by depositing a material on the radiation guide 4 via ink jet.

The cladding coating 8 can be provided by depositing a material comprising GLYMO, BYK33, and PAG on the substrate 2 via an ink jet. The radiation guide 4 can be provided by depositing a material comprising GLYMO, BYK33, PAG, SU8, and DPDMS on the substrate 2 via an ink jet. The luminescent elements 3 can be provided by depositing a material comprising GLYMO, BYK33, PAG, SU8, DPDMS, and Rhodamine on the radiation guide 4 via an ink jet.

The substrate 2 can be manufactured from a partially radio-opaque material, such that the luminescent elements 3 are only observable by a user when radiated via the source radiation of the first radiation source 6a and, alternatively or additionally, of the second radiation source 6b. The substrate 2 can also be manufactured from a partially radio-transparent material and a partially radio-opaque coating, such that the luminescent elements 3 are only observable by a user when radiated via the source radiation of the first radiation source 6a and, alternatively or additionally, of the second radiation source 6b. The partially radio-opaque coating can be deposited via physical vapor deposition.

### List of reference signs

- 1: device
- 2: substrate
- 3: luminescent element
- 4: radiation guide
- 5: barrier element
- 5a: reflecting barrier element
- 5b: non-reflecting barrier element
- 6a: first radiation source
- 6b: second radiation source
- 7: excitation source
- 7a: excitation connector
- 8: cladding coating
- 9: source radiation
- 10: visible light
- 11: extensions of the radiation guide
- 12: electronic control unit
- L: longitudinal direction

## Claims

1. A home appliance with a display for displaying information regarding the home appliance operation, wherein the display comprises a device for displaying optical information (1) to a user, comprising:
- a substrate (2);
- a radiation guide (4) provided on top of the substrate (2) for guiding a source radiation (9);
- at least two luminescent elements (3), wherein the at least two luminescent elements (3) emit visible light (10) when radiated by the source radiation (9);
- at least one barrier element (5) arranged inbetween the at least two luminescent elements (3), wherein the at least one barrier element (5) is configured such that its reflectance with respect to the source radiation (9) is influenceable from the exterior;
- an excitation source (7) connected with the at least one barrier element (5) such that it influences the reflectance of the at least one barrier element (5);
wherein the device (1) further comprises a first radiation source (6a) and a second radiation source (6b), particularly LEDs, wherein the first radiation source (6a) and the second radiation source (6b) emit the source radiation (9) during operation of the device (1);
wherein a first wavelength of the source radiation (9) emitted by the first radiation source (6a) and a second wavelength of the source radiation (9) emitted by the second radiation source (6b) are different from each other, such that the at least two luminescent elements (3) emit a different visible color when radiated via the first radiation source (6a) than when radiated via the second radiation source (6b);
wherein the home appliance comprises an electronic control unit (12) for controlling the excitation source (7) and the first and second radiation source (6a, 6b), wherein the control unit is adapted to radiate the more or the fewer luminescent elements (3) by the first radiation source, the further an operation cycle of the home appliance has progressed, while the remaining luminescent elements (3) are radiated by the second radiation source.

2. The home appliance according to claim 1, **characterized in that** the radiation guide (4) is shaped linearly along a longitudinal direction (L) and the at least two luminescent elements (3) and the at least one barrier element (5) are arranged along the longitudinal direction (L) adjacent to the radiation guide (4).

3. The home appliance according to any of the preceding claims, **characterized in that** the first radiation source (6a) and/or the second radiation source (6b) are arranged in the extensions (11) of the radiation guide (4) along the longitudinal direction (L).

4. The home appliance according to any of the preceding claims, **characterized in that** the substrate (2) is partially radio-opaque, such that the at least two luminescent elements (3) are only observable by a user when radiated via the source radiation (9).

5. The home appliance according to any of the preceding claims, **characterized in that** the excitation source (7) is configured such that it influences the reflectance of the at least one barrier element (5) electrically and/or thermically.

6. The home appliance according to any of the preceding claims, **characterized in that** the device (1) further comprises a cladding coating (8) provided between the substrate (2) and the radiation guide (4).

7. The home appliance according to any of the preceding claims, wherein the home appliance is a dishwasher, a washing machine, a dryer, a wash-dryer, an oven, a cooktop, a refrigerator or a coffee machine.

## Patentansprüche

1. Haushaltsgerät mit einer Anzeige zum Anzeigen von Informationen bezüglich des Betriebs des Haushaltsgeräts, wobei die Anzeige eine Vorrichtung zum Anzeigen von optischen Informationen (1) für einen Benutzer mit Folgendem umfasst:
- einem Substrat (2),
- einer oben auf dem Substrat (2) vorgesehenen Strahlführung (4) zum Lenken einer Quellstrahlung (9),
- mindestens zwei leuchtenden Elementen (3), wobei die mindestens zwei leuchtenden Elemente (3) sichtbares Licht (10) emittieren, wenn sie mit der Quellstrahlung (9) bestrahlt werden,
- mindestens einem Barriereelement (5), das zwischen den mindestens zwei leuchtenden Elementen (3) angeordnet ist, wobei das mindestens eine Barriereelement (5) so konfiguriert ist, dass sich sein Reflexionsvermögen in Bezug auf die Quellstrahlung (9) von außen beeinflussen lässt,
- einer Anregungsquelle (7), die so mit dem mindestens einen Barriereelement (5) verbunden ist, dass sie dessen Reflexionsvermögen beeinflusst,
wobei die Vorrichtung (1) ferner eine erste Strahlungsquelle (6a) und eine zweite Strahlungsquelle (6b), insbesondere LED, umfasst, wobei die erste Strahlungsquelle (6a) und die zweite Strahlungsquelle (6b) bei Betrieb der Vorrichtung (1) die Quellstrahlung (9) emittieren,
wobei sich eine erste Wellenlänge der von der ersten Strahlungsquelle (6a) emittierten Quellstrahlung (9) und eine zweite Wellenlänge der von der zweiten Strahlungsquelle (6b) emittierten Quellstrahlung (9) voneinander unterscheiden, so dass die mindestens zwei leuchtenden Elemente (3) eine andere sichtbare Farbe emittieren, wenn sie von der ersten Strahlungsquelle (6a) angestrahlt werden, als wenn sie von der zweiten Strahlungsquelle (6b) angestrahlt werden,
wobei
das Haushaltsgerät eine elektronische Steuereinheit (12) zum Steuern der Anregungsquelle (7) und der ersten und der zweiten Strahlungsquelle (6a, 6b) umfasst, wobei die Steuereinheit so ausgelegt ist, dass sie die mehr oder weniger leuchtenden Elemente (3) mit der ersten Strahlungsquelle bestrahlt, je weiter ein Betriebszyklus des Haushaltsgeräts fortgeschritten ist, während die verbleibenden leuchtenden Elemente (3) mit der zweiten Strahlungsquelle bestrahlt werden.

2. Haushaltsgerät nach Anspruch 1, **dadurch gekennzeichnet, dass** die Strahlführung (4) in einer Längsrichtung (L) linear geformt ist und die mindestens zwei leuchtenden Elemente (3) und das mindestens eine Barriereelement (5) in Längsrichtung (L) an die Strahlführung (4) angrenzend angeordnet sind.

3. Haushaltsgerät nach einem der vorhergehenden Ansprüche, **dadurch gekennzeichnet, dass** die erste Strahlungsquelle (6a) und/oder die zweite Strahlungsquelle (6b) in Längsrichtung (L) in der Verlängerung (11) der Strahlführung (4) angeordnet sind.

4. Haushaltsgerät nach einem der vorhergehenden Ansprüche, **dadurch gekennzeichnet, dass** das Substrat (2) teilweise strahlenundurchlässig ist, so dass die mindestens zwei leuchtenden Elemente (3) für einen Benutzer nur sichtbar sind, wenn sie von der Quellstrahlung (9) angestrahlt werden.

5. Haushaltsgerät nach einem der vorhergehenden Ansprüche, **dadurch gekennzeichnet, dass** die Anregungsquelle (7) so konfiguriert ist, dass sie das Reflexionsvermögen des mindestens einen Barriereelements (5) elektrisch und/oder thermisch beeinflusst.

6. Haushaltsgerät nach einem der vorhergehenden Ansprüche, **dadurch gekennzeichnet, dass** die Vorrichtung (1) ferner zwischen dem Substrat (2) und der Strahlenführung (4) einen Überzug (8) umfasst.

7. Haushaltsgerät nach einem der vorhergehenden Ansprüche, wobei es sich bei dem Haushaltsgerät um einen Geschirrspüler, eine Waschmaschine, einen Trockner, einen Waschtrockner, einen Backofen, eine Kochstelle oder eine Kaffeemaschine handelt.

## Revendications

1. Appareil ménager avec un affichage pour afficher les informations concernant le fonctionnement de l'appareil ménager, dans lequel l'affichage comprend un dispositif pour l'affichage des informations optiques (1) pour un utilisateur, comprenant :
- un substrat (2) ;
- un guidage de rayonnement (4) disposé sur le dessus du substrat (2) pour le guidage d'un rayonnement source (9) ;
- au moins deux éléments luminescents (3), dans lequel les au moins deux éléments luminescents (3) émettent une lumière visible (10) lorsqu'elle est émise par le rayonnement source (9) ;
- au moins un élément barrière (5) disposé entre les au moins deux éléments luminescents (3), dans lequel l'au moins un élément barrière (5) est configuré de sorte que sa réflectivité par rapport au rayonnement source (9) est influençable depuis l'extérieur ;
- une source d'excitation (7) connectée avec l'au moins un élément barrière (5) de sorte qu'elle influence la réflectivité de l'au moins un élément barrière (5) ;
dans lequel le dispositif (1) comprend également une première source de rayonnement (6a) et une seconde source de rayonnement (6b), en particulier à LEDs, dans lequel la première source de rayonnement (6a) et la seconde source de rayonnement (6b) émettent la source de rayonnement (9) durant le fonctionnement du dispositif (1) ;
dans lequel une première longueur d'onde de la source de rayonnement (9) émise par la première source de rayonnement (6a) et une seconde longueur d'onde de la source de rayonnement (9) émise par la seconde source de rayonnement (6b) sont différentes l'une de l'autre, de sorte que les au moins deux éléments luminescents (3) émettent une couleur visible différente lorsqu'ils sont rayonnés par la première source de rayonnement (6a) que lorsqu'ils sont rayonnés par la seconde source de rayonnement (6b) ;
dans lequel
l'appareil ménager comprend une unité de contrôle électronique (12) pour le contrôle de la source d'excitation (7) et de la première et de la seconde source de rayonnement (6a, 6b), dans lequel l'unité de contrôle est adaptée afin de rayonner le plus ou le moins d'éléments luminescents (3) par la première source de rayonnement, plus le cycle de fonctionnement de l'appareil ménager a progressé, tandis que les éléments luminescents (3) restants sont rayonnés par la seconde source de rayonnement.

2. Appareil ménager selon la revendication 1, **caractérisé en ce que** le guidage de rayonnement (4) est formé linéairement le long d'une direction longitudinale (L) et les au moins deux éléments luminescents (3) et l'au moins un élément barrière (5) sont disposés le long de la direction longitudinale (L) adjacente au guidage de rayonnement (4).

3. Appareil ménager selon l'une quelconque des revendications précédentes, **caractérisé en ce que** la première source de rayonnement (6a) et/ou la seconde source de rayonnement (6b) sont disposées dans les extensions (11) du guidage de rayonnement (4) le long de la direction longitudinale (L).

4. Appareil ménager selon l'une quelconque des revendications précédentes, **caractérisé en ce que** le substrat (2) est partiellement radio-opaque, de sorte que les au moins deux éléments luminescents (3) ne sont observables par l'utilisateur que lorsqu'ils sont rayonnés via la source de rayonnement (9).

5. Appareil ménager selon l'une quelconque des revendications précédentes, **caractérisé en ce que** la source d'excitation (7) est configurée de sorte qu'elle influence la réflectivité d'au moins un élément barrière (5) électriquement et/ou thermiquement.

6. Appareil ménager selon l'une quelconque des revendications précédentes, **caractérisé en ce que** le dispositif (1) comprend également un revêtement recouvrant (8) disposé entre le substrat (2) et le guidage de rayonnement (4).

7. Appareil ménager selon l'une quelconque des revendications précédentes, dans lequel l'appareil ménager est un lave-vaisselle, une machine à laver, un séchoir, un sèche-linge, un four, une table de cuisson, un réfrigérateur ou une machine à café.
